# EUROPÄISCHE PATENTANMELDUNG

(11) **EP 0 981 003 A1**
(43) Veröffentlichungstag der Anmeldung: **23.02.2000**
(21) Anmeldenummer: 99202616.1
(22) Anmeldetag: 10.08.1999
(51) Int. Cl.: F16L 21/08, F16L 47/06

(54) **Rohrkupplung**

(30) Priorität: 17.08.1998 NL 1009881
(71) Anmelder: J. van Walraven B.V., NL-3641 RK Mijdrecht (NL)
(72) Erfinder: Van Walraven, Jan, 3641 GP Mijdrecht (NL)
(74) Vertreter: Brookhuis, Hendrik Jan Arnold

(57) **Zusammenfassung**

Eine Rohrkupplung (1) zum abdichtenden Verbinden zweier Rohrenden (2,3), umfassend ein im wesentlichen ringförmiges, elastisches Dichtelement (4), das mit einer im wesentlichen zylindrischen Öffnung für die Rohrenden versehen ist, zwei oder mehrere Griffeinheiten (8,9), die jeweils aus einem oder mehreren Griffelementen zum Fixieren der Rohrenden bestehen, eine metallene Manschette (11) um das elastische Dichtelement und die Griffelemente, welche Manschette an zumindestens einer Stelle geteilt ist, ein elastisches Trennungselement, das dazu vorgesehen ist, zwischen den Rohrenden zu liegen, und Spannmittel, die dazu geeignet sind, die Manschette und damit die konzentrischen Griffeinheiten um die Rohrenden herum anzuspannen, und dabei das elastische Dichtelement lecksicher abdichten zu lassen, wobei zumindestens eine der Griffeinheiten in axiale und radiale Rohrrichtung von einer gedämpft federnden Halterung in der Manschette aufgehängt ist. Das elastische Trennungselement kann geschlossene, mit Gas gefüllte Räume enthalten.

## Beschreibung

Die vorliegende Erfinding bezieht sich auf eine Rohrkupplung nach dem Oberbegriff des Anspruchs 1. Die abdichtend zu verbindenden Rohrenden sind insbesonders glattzylindrisch oder unprofiliert ausgebildet und können ein Teil von im wesentlichen geraden Rohrteilen, oder von nicht geraden Rohrteilen, wie zum Beispiel Bogenstücken und T-Stücken sein. Die Rohre können z.B Abwasserrohre aus Gusseisen oder Stahl sein.

Eine derartige Rohrkupplung ist aus der Patentanmeldung DE-195 42 463 A1 bekannt. Diese Rohrkupplung bietet eine gegenseitige Fixierung der Rohrenden, welche Fixierung infolge der Wirkung der metallenen Griffeinheiten widerstandsfähig gegen hohe gegenseitige Belastungen der Rohrenden in axiale und radiale Richtung ist. Derartige Belastungen treten zum Beispiel auf, wenn eine Anzahl von Rohren zu einem Rohrleitungsteil vorgefertigt und anschließend transportiert werden, ehe in einem Bauwerk verlegt zu werden.

Andere Rohrkupplungen sind zum Beispiel in der DE-36 32 127 C2 und EP 0 738 850 B1 beschrieben worden.

Jede der Rohrkupplungen gemäß den obengenannten Veröffentlichungen bildet über die Griffeinheiten und die metallene Manschette eine Metall-auf-Metall-Brücke zwischen den Rohrenden. Dies hat den Nachteil, daß eine erhebliche Schallübertragung zwischen den Rohrenden stattfindet. Es hat sich herausgestellt, daß dies zu einem erheblichen Rohrleitungsrauschen bei Anwendung der bekannten Rohrkupplungen für sanitäre Abflußleitungen führt.

In der EP 0 498 322 A1 wird eine Rohrkupplung beschrieben, die sich durch das Fehlen metallener Griffeinheiten von der Rohrkupplung nach dem Oberbegriff unterscheidet. Bei dieser Rohrkupplung wird eine gegenseitige Fixierung der Rohrenden dadurch erhalten, daß die Manschette angespannt wird und das Dichtelement auf die Rohrenden gepresst wird. So bildet die Rohrkupplung keine Metall-auf-Metall-Brücke zwischen den Rohrenden. Ein Nachteil einer derartigen Rohrkupplung gegenüber obengenannten Rohrkupplungen mit metallene Griffeinheiten ist, daß die gegenseitige Fixierung der Rohrenden bereits bei einer geringen Belastung verloren geht.

Der Erfindung liegt die Aufgabe zugrunde, eine Rohrkupplung nach dem Oberbegriff zu schaffen, die eine gegenseitige Fixierung der Rohrenden bietet, welche widerstandsfähig gegen eine hohe axiale und radiale gegenseitige Belastung der Rohrenden ist, wobei außerdem die Schallübertragung zwischen den Rohren erheblich reduziert ist. Das Reduzieren der Schallübertragung ist unter anderem sehr wichtig für Rohrleitungen, die in Bauwerken angeordnet sind. Für die in den Räumen eines Bauwerks vorhandenden Anlagen, worunter Rohrleitungen, gelten Vorschriften in bezug auf den maximal erlaubten Schallpegel. Wenn erfindungsgemäße Rohrkupplungen in den Rohrleitungen angewendet werden, wird durch ihre schallisolierende Wirkung der von den Rohrleitungen erzeugte Schallpegel niedriger als bei den bestehenden Rohrkupplungen liegen, so daß die erwähnten Vorschriften einfacher erfüllt werden können.

Diese Aufgabe wird erfindungsgemäß mit einer obenbeschriebenen Rohrkupplung gelöst, bei der zumindestens eine der Griffeinheiten in axiale und radiale Rohrrichtung von einer gedämpft federnden Halterung in der Manschette gehalten ist. Infolge dieser gedämpft federnden Halterung werden Schallschwingungen, die sich durch die Rohre bewegen stark verringert von Rohrende auf Rohrende übertragen, weil die gedämpft federnde Halterung die Metall-auf-Metall-Brücke unterbricht, welche in den obengenannten Veröffentlichungen DE-195 42 463 A1, DE 36 32 127 C2 und EP 0 738 850 B1 vorhanden ist und dort als Leiter der Gerausche fungiert.

Wichtig ist weiter, daß die Rohrenden nicht mit ihren Stirnenden in der Rohrkupplung gegeneinander liegen können. Dazu ist vorzugsweise ein elastisches Trennungselement angeordnet. Ohne ein derartiges elastisches Trennungselement kann ein direkter Metall-auf-Metall-Kontakt zwischen den Rohrenden entstehen, und deshalb wird dennoch ein Rauschen übertragen werden. In den bekannten Rohrkupplungen nach dem Oberbegriff ist ein elastisches Trennungselement zwischen den Rohrenden angeordnet, aber dieses ist für eine andere Funktion als die einer Schalldämpfung vorgesehen, nämlich für die Positionierung der Manschette während der Montage und in montiertem Zustand. Das elastische Trennungselement schafft bei derartigen bekannten Rohrkupplungen keine Schallisolierung, weil der Schall noch immer über die Klemmringe und die Manschette übertragen wird.

In einer vorteilhaften Ausbildung ist die gedämpft federnde Halterung aus einem elastischen Material, zum Beispiel Gummi oder einem Elastomer, hergestellt. Durch eine geeignete Wahl des Kunststofftyps kann ein günstiges, an die spezifischen Betriebsbedingungen angepaßtes Gleichgewicht zwischen federnder und dämpfender Wirkung erzielt werden.

In einer weiteren Ausbildung ist jede der federnden Halterungen aus einem relativ weichen Kunststoffkörper hergestellt, der zumindestens über einen Teil seiner Oberfläche von einer relativ harten Tragfläche aus Kunststoff bedeckt ist, welche federnde Halterung in montiertem Zustand der Rohrkupplung eine der Griffeinheiten trägt und positioniert.

Eine andere Weise, eine lange Lebensdauer der federnden Halterung zu erreichen, besteht darin, daß in jede der federnden Halterungen eine Griffeinheit in das elastische Material in solcher Weise eingebetten, ggf. gegossen wird, daß zumindestens ein Teil der Griffeinheit sich außerhalb des elastischen Materials befindet.

Weiter kann jede der Griffeinheiten aus einem Griffring bestehen, welcher in Umfangsrichtung an zumindestens einer Stelle geteilt ist.

Für eine besonders kräftige axiale Fixierung hat den Querschnitt des Griffrings zwei Enden, die jeweils mit einem scharfen Rand oder einer Verzahnung versehen sind, welche in montiertem Zustand der Rohrkupplung an die Rohrenden angreift, wobei der eine scharfe Rand oder die Verzahnung gegenüber der Achse der Griffringe axial auswärts gerichtet ist, und der andere scharfe Rand oder die Verzahnung gegenüber der Achse der Griffringe axial einwärts gerichtet ist.

In einer in einer einfachen Weise herzustellenden Ausbildung der Rohrkupplung ist der Querschnitt der Griffringe im wesentlichen U- oder V-förmig.

Für eine gute Fixierung der metallenen Griffringe in der federnden Halterung kann der Querschnitt außerdem zumindestens einen im wesentlichen in radiale Richtung des Griffrings hervorstehenden Teil aufweisen, der in der federnden Halterung eingebettet ist.

Schließlich ist es vorteilhaft, das elastische Dichtelement, das elastische Trennungselement und die federnde Halterung einteilig zu bilden. Dies vereinfacht die Herstellung, sowie die Montage der Rohrkupplung erheblich.

Die Erfindung wird anhand der Zeichnungen erläutert werden. Es zeigt:
- Fig. 1: einen Querschnitt durch eine erste Ausbildung einer erfindungsgemäßen Rohrkupplung,
- Fig. 2: einen Querschnitt durch eine zweite Ausbildung einer erfindungsgemäßen Rohrkupplung,
- Fig. 3: eine Ausschnittsvergrößerung des elastischen Trennungselements zwischen den Rohrenden der Fig. 2, und
- Fig. 4: eine Ausschnittsvergrößerung der federnden Halterung der Fig. 2.

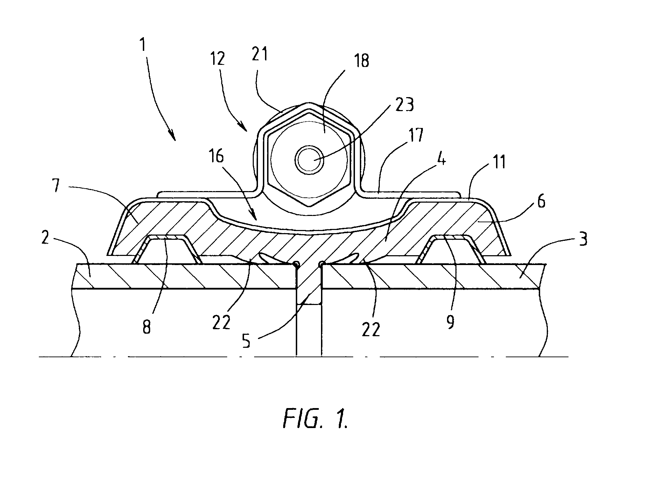

In Figur 1 ist eine Rohrkupplung 1 an zwei glatten und zylindrischen Rohrenden 2, 3 angeordnet worden. Die Rohrkupplung 1 umfaßt ein elastisches Dichtelement 4, das eine zylindrische Öffnung hat, in die die beiden Rohrenden 2, 3 hineingeschoben sind, sowie eine metallene Manschette, die um das elastische Dichtelement 4 angeordnet ist, welche Manschette 11 an einer nicht in der Zeichnung dargestellten Stelle geteilt ist. Weiter umfaßt die Rohrkupplung 1 zwei metallene Griffringe 8, 9, die in axiale Richtung der Rohre gesehen jeweils an einer Seite der Manschette 11 mittels gedämpft federnden Halterungen 6, 7 in der Manschette 11 angeordnet sind. Die Griffringe 8, 9 sind in Umfangsrichtung geteilt und können mit einer Profilierung 10 versehen sein, welche in montiertem Zustand der Rohrkupplung auf die in die Rohrkupplung geschobenen Rohrenden eingreift und so eine solide axiale Fixierung gewährleistet. Die Machette 11 is z.B aus Stahl, bevorzugt aus Edelstahl hergestellt.

An der Außenseite der Manschette 11 ist eine Spannvorrichtung 12 vorgeshen, mit denen die Manschette 11 und die Griffringe 8, 9 in solcher Weise um die Rohrenden 2, 3 herum angespannt werden können, daß das elastische Dichtelement lecksicher abdichtet, und die Griffringe 8, 9 die Rohrenden 2, 3 in axiale und radiale Richtung fixieren. Die Spannvorrichtung umfast hier zwei Laschen 17, 17', die in solcher Weise mit einem Spannbolzen 23, zwei Ringen 21 und einer Mutter 18 zusammenwirken, daß die Manschette 11 gespannt werden kann. Eine derartige Spannvorrichtung 12 ist z.B aus dem deutschen Patent DE 41 03 702 C1 bekannt.

In einer nicht gezeigten Ausbildung umfasst die Spannvorrichtung zwei von derartigen Einheiten von Laschen, Spannbolzen, Ringen und Mutter, wobei jede der Einheiten in der Höhe eines der zwei Griffeinheiten positioniert ist.

Zwischen den Rohrenden 2, 3 ist ein elastisches Trennungselement 5 angeordnet, die hier an dem Dichtelement 4 angeformt ist. Zugleich sind hier an dem elastischen Dichtelement 4 an beiden Seiten des elastischen Trennungselements 5 zwei Dichtlippen 22 angeformt sein, die an die Rohrenden angreifen, welche Dichtlippen 22 in solcher Weise gebildet sind, daß sie, wenn der Druck des Fluidums in den Rohren ansteigt, gegen die Außenoberflächen der Rohrenden gedrückt werden, und so eine lecksichere Verbindung zwischen den Rohren gewährleisten.

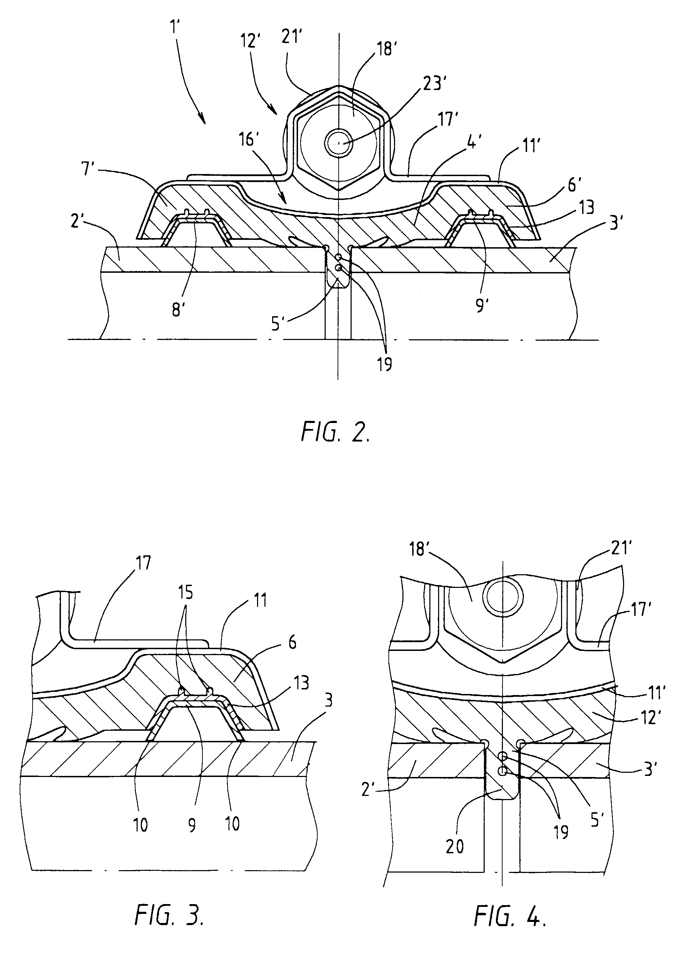

In Figur 2 wird eine zweite Ausbildung einer erfindungsgemäßen Rohrkupplung dargestellt, die sich von der in Figur 1 gezeigten Ausbildung durch die Ausführung des einteilig gebildeten elastischen Dichtelements 4, 4', des elastischen Trennungselements 5, 5' und der gedämpft federnden Halterung 6, 7 unterscheidet. In der Ausbildung der Figur 2 ist eine relativ harte Tragfläche 13 aus Kunststoff angeordnet und das elastische Trennungselement 5' enthält mit Gas gefüllte Kanäle 19 zur Erhöhung der Elastizität.

In Figur 3 ist die Halterung 6 in Detail gezeigt. Diese umfasst ein Teil aus einem weichen Gummi oder Elastomer, das an ihrer Aussenseite an der metallene Manschette 11 anliegt und an ihrer Innenseite teilweise, insbesondere bei dem Griffring 9, von einer relativ harten Tragfläche 13, bevorzugt aus Kunststoff, bedeckt wird. Die Tragfläche 13 is ringformig ausgebildet und hat hier weiter zwei in radiale Richtung nach aussen hervorstehende Umfangsrippen 15, die in dem weichen Teil eingebettet sind.

Der metallenen Griffring 9 hat einen U- oder V-förmigen Querschnitt und liegt in solcher Weise an die Tragfläche 13 an, daß den Ring 9 in axiale und radiale Richtung der Rohre von der gedämpft federnden Halterung 6 gehalten wird. Die härtere Tragfläche 13 verteilt die Kräfte des Griffringes 9 gleichmäßig über das weiche Teil der federnden Halterung 6 und beugt deren Abnutzung vor. Die Halterung 6 kann zum Beispiel durch ein Zweikomponentenspritzgießen oder ein Koextrudieren hergestellt sein.

Fig. 4 zeigt das elastische Trennungselement 5 der Ausbildung der Figur 3. In der dargestellten Ausbildung gemäß den Figuren bildet das elastische Trennungselement 5' ein Ganzes mit dem elastischen Dichtelement 4' und außerdem mit den gedämpft federnden Halterungen 6', 7'.

In dem elastischen Trennungselement 5' sind konzentrisch zwei Kanäle 19 ausgespart, um die federne Wirkung zu erhöhen. Diese Kanäle 19 sind dadurch geformt, daß das elastische Trennungselement 5' während der Herstellung des Teils, der das elastische Dichtelement 4', das elastische Trennungselement 5' und die gedämpft federnden Halterungen bildet, mit einem radialen Schnitt versehen ist. An beiden Seiten dieses Schnitts sind zwei halbe konzentrische Aussparungen gebildet.

In beiden dargestellten Ausbildungen ist das elastische Trennungselement 5, 5' dadurch relativ zu der Manschette fixiert, daß es ein Ganzes mit dem elastischen Dichtelement 4, 4' bildet. So ist das elastische Dichtelement 5, 5' zugleich dazu geeignet, die Rohrkupplung bei der Montage zu den beiden Rohrenden zu positionieren und es fördert die abdichtende Wirkung der Rohrkupplung 1, 1'.

## Patentansprüche

1. Rohrkupplung (1) zum abdichtenden Verbinden zweier Rohre (2,3), insbesondere der glattzylindrische Enden von Abwasserrohren, umfassend:
- eine spanbare metallene Manschette (11), die an zumindestens einer Stelle geteilt ist,
- ein innerhalb der Manschette (11) angeordnetes und im wesentlichen ringförmiges, elastisches Dichtelement (4), das mit einer im wesentlichen zylindrischen Öffnung, in die die Rohre hineinpassen, versehen ist,
- zwei oder mehrere ebenfalls innerhalb der Manschette angeordnete Griffeinheiten (8,9), die an jeweils einem der beiden zu verbinden Rohre zur Anlage bringbar sind und jeweils aus einem oder mehreren Griffelementen bestehen,
- ein elastisches Trennungselement (5), das dazu vorgesehen ist, zwischen den Stirnenden der Rohre zu liegen,
- eine Spannvorrichtung (12), die dazu geeignet ist, die Manschette und damit die Griffeinheiten um die Rohre herum anzuspannen, und dabei das elastische Dichtelement lecksicher abdichten zu lassen,
**dadurch gekennzeichnet, daß**
- zumindestens eine der Griffeinheiten in axiale und radiale Rohrrichtung von einer gedämpft federnden Halterung (6, 7; 6', 7') in der Manschette gehalten ist.

2. Rohrkupplung nach Anspruch 1, bei der jede der gedämpft federnden Halterungen (6, 7; 6', 7') aus einem elastischen Material hergestellt ist.

3. Rohrkupplung nach Anspruch 1 oder 2, bei der jede der federnden Halterungen (6, 7; 6', 7') aus einem weichen Kunststoffkörper (12, 12') hergestellt ist, der zumindestens über einen Teil seiner Oberfläche von einer harten Tragfläche (13), bevorzugt aus Kunststoff, bedeckt ist, welche federnde Halterung in montiertem Zustand der Rohrkupplung eine der metallenen Griffeinheiten (8, 9; 8', 9') trägt und positioniert.

4. Rohrkupplung nach einem der Ansprüche 1 - 3, bei der in jede der federnden Halterungen (6, 7; 6', 7') eine Griffeinheit in solcher Weise in das elastische Material eingebettet ist, daß zumindestens ein Teil der Griffeinheit sich außerhalb des elastischen Materials befindet.

5. Rohrkupplung nach einem der Ansprüche 1 - 4, bei der jede der Griffeinheiten aus einem Griffring gebildet ist, welcher in Umfangsrichtung an zumindestens einer Stelle geteilt ist.

6. Rohrkupplung nach Anspruch 5, bei der der Querschnitt jedes Griffrings (8, 9; 8', 9') zwei Enden hat, die jeweils mit einem scharfen Rand oder einer Verzahnung versehen sind, welche in montiertem Zustand der Rohrkupplung an die Rohrenden angreift, wobei der eine scharfe Rand oder die Verzahnung gegenüber der Achse der Griffringe axial auswärts gerichtet ist, und der andere scharfe Rand oder die Verzahnung gegenüber der Achse der Griffringe axial einwärts gerichtet ist.

7. Rohrkupplung nach Anspruch 5 oder 6, bei der der Querschnitt des Griffrings im wesentlichen U- oder V-förmig ist.

8. Rohrkupplung nach einem der Ansprüche 5-7, bei der der Querschnitt des Griffrings (8, 9; 8', 9') außerdem zumindestens einen im wesentlichen in radiale Richtung des Griffrings hervorstehenden Teil (14, 15) aufweist, der in der federnden Halterung eingebettet ist.

9. Rohrkupplung nach einem der Ansprüche 1-8, bei der in dem elastischen Trennungselement (5; 5') geschlossene, mit Gas gefüllte Räume angeordnet sind.

10. Rohrkupplung nach einem der vorhergehenden Ansprüche, bei der das elastische Dichtelement (4; 4'), das elastische Trennungselement (5; 5'), und die federnde Halterung (6, 7; 6', 7') einteilig gebildet sind.
